# EUROPEAN PATENT APPLICATION

(11) **EP 1 529 986 A1**
(43) Date of publication of application: **11.05.2005**
(21) Application number: 04026150.5
(22) Date of filing: 04.11.2004
(51) Int. Cl.: F16H 25/22, B23K 11/31

(54) **Linear screw actuator**

(30) Priority: 06.11.2003 IT BO20030655
(71) Applicant: TECNA S.p.A., 40024 Castel San Pietro Terme (Bologna) (IT)
(72) Inventor: Amadori, Ezio, 40024 Castel S. Pietro Terme (Bologna) (IT)
(74) Representative: Modiano, Guido, Dr.-Ing.

(57) **Abstract**

A linear screw actuator, comprising a rotatable actuation shaft (7), with which a slider (8) is associated by means of a screw-and-nut coupling and can move between two mutually opposite end positions; the actuator further comprising a rotation-preventing limiter (16) that is suitable to cushion elastically the accidental impact of the slider (8) against foreign objects (17) in any position of its advancement stroke along the actuation shaft (7).

## Description

The present invention relates to a linear screw actuator.

Many kinds of linear actuator, for example electrically-operated actuators, are currently known which are suitable to convert the rotation of a shaft into a translational motion of a slider, which is accordingly actuated so as to perform the most disparate functions. Couplings of the screw-and-nut type between the actuation shaft and the slider have been widely used to perform this motion conversion; these couplings allow to position the slider with extreme precision and to apply thereto even very high torques associated with considerable translational speeds both during advancement and during retraction.

A typical field of application of linear actuators of the types described above is for example, among others, the field of resistance, spot, roller or similar welding machines, which in order to be able to perform welding operations correctly must be able to apply intense pressures to the parts to be joined in short time intervals, performing swift and precise movements of the electrodes.

In performing a weld, as well as in many other technological applications, the sliders and other parts moved by said actuators may often accidentally encounter, in their stroke, foreign objects or parts to be joined that are incorrectly positioned and cause a sudden impact, which due to the inertia accumulated in the rotor may damage the actuation components.

The aim of the present invention is to obviate the above-cited drawback, by providing a linear screw actuator that is suitable to operate effectively in any condition, even in situations in which unexpected obstacles or foreign objects may potentially occur during the advancement of the slider, possibly causing an impact with sudden stop.

Within this aim, an object of the present invention is to provide a linear screw actuator that is extremely versatile in use and is suitable for technological applications of various kinds.

Another object of the present invention is to provide a linear screw actuator that has a simple structure, is relatively easy to provide in practice, safe in use, effective in operation, and has a relatively low cost.

This aim and these and other objects that will become better apparent hereinafter are achieved by the present linear screw actuator, which comprises a rotatable actuation shaft, with which a slider is associated by means of a screw-and-nut coupling, said slider being movable between two mutually opposite end positions, characterized in that it comprises a rotation-preventing limiter that is suitable to cushion elastically the accidental impact of said slider against foreign objects in any position of its advancement stroke along said actuation shaft.

Further characteristics and advantages of the present invention will become better apparent from the following detailed description of a preferred but not exclusive embodiment of a linear screw actuator according to the invention, illustrated by way of non-limiting example in the accompanying drawings, wherein:
Figure 1 is a partially sectional side elevation view of the linear screw actuator according to the invention, with the slider in retracted position, installed on a resistance-welding machine;
Figure 2 is a view of a detail of Figure 1, particularly of the limiter;
Figure 3 is transverse sectional view of the actuator, taken along the line III-III of Figure 2;
Figure 4 is a partially sectional side elevation view of a detail of the actuator according to the invention, with the slider in the forward stroke limit position;
Figure 5 is a partially sectional side elevation view of a detail of the actuator according to the invention, with the slider in a position of accidental impact against a foreign object along its advancement stroke.

In the embodiment that follows, individual characteristics, given in relation to this specific example, may actually be interchanged with other different characteristics that exist in other embodiments.

Moreover, it is noted that anything found to be already known during the patenting process is understood not to be claimed and to be the subject of a disclaimer.

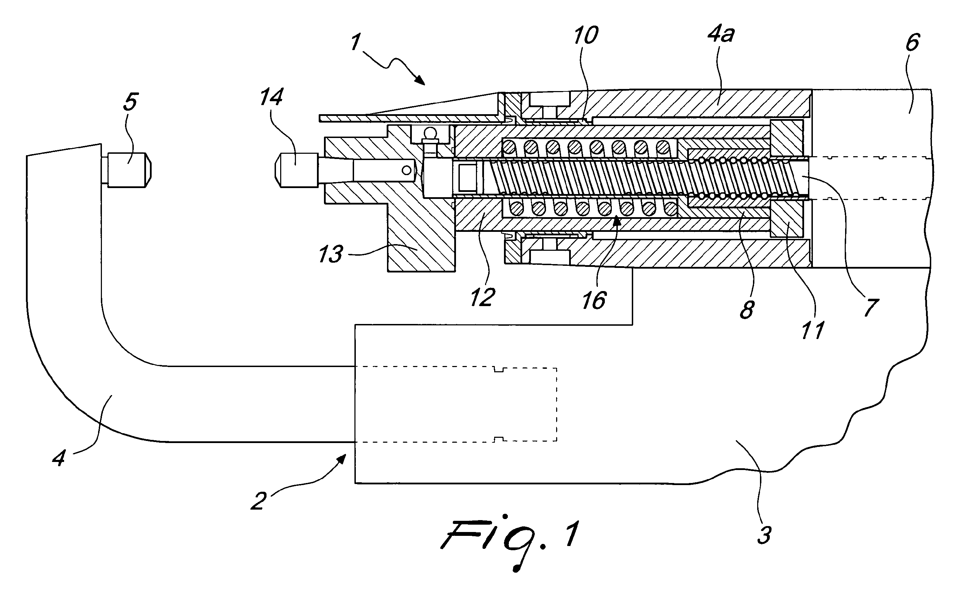

With reference to Figure 1, the reference numeral 1 generally designates a linear screw actuator according to the invention.

The embodiment of the actuator shown in the figures refers, in the specific case, to an electric resistance-welding machine, generally designated by the reference numeral 2, which has the so-called C-shaped configuration; however, it is noted that the linear actuator according to the invention may be used effectively in any other kind of technical or technological application without any exclusion.

The welding machine 2 comprises a frame 3, with which a fixed arm 4 and a hollow support 4a are rigidly coupled; the fixed arm 4 is bent substantially at right angles and is provided with a first electrode 5 at its free end.

The linear actuator, of the electrically-operated type, comprises a motor 6 (for example of the so-called brushless type), which is fixed to the frame 3 and is provided with an actuation shaft 7. The actuation shaft 7 is threaded externally and is associated with a slider 8 by means of a screw-and-nut coupling with a lead screw 9. The screw-and-nut coupling described above allows to convert the rotary motion of the actuation shaft 7 into a translational motion of the slider 8 between two mutually opposite stroke limit end positions, of which one is a retracted position (the slider 8 is proximate to the stator 6) and one is a forward position (the slider is proximate to the free end of the actuation shaft 7). The slider 8 is shaped like an elongated parallelepiped with a substantially square transverse cross-section with rounded comers, and is slidingly engaged along a square guide 10, which has a complementary cross-section. The square guide 10 is rigidly coupled to the hollow support 4a and is therefore rigidly coupled to the frame 3 of the welding machine 2, so that rotation of the slider 8 with respect to the frame 3 is prevented. The slider 8 forms a first end portion 11 and a second end portion 12, which are mutually opposite; an electrode holder 13 for a second electrode 14 is fixed to the second end portion 12.

In the practical operation of the welding machine 2, the translational motion of the slider 8 from the first end position, with the lead screw 9 retracted and proximate to the motor 6, to the second end portion, with the lead screw 9 in a forward position proximate to the end of the actuation shaft 7, allows to move the electrode holder 13 with the second electrode 14 to the vicinity of the first electrode 5, so that said electrodes clamp onto the parts 15 to be welded with a predefined force, i.e., the correct welding force set by the user.

According to the invention, the linear actuator comprises a rotation-preventing limiter 16, which is suitable to cushion elastically the impact of the second electrode 14 against any foreign object 17 that may have accidentally blocked the stroke of the slider 8, or against an incorrectly positioned part 15 to be welded; elastic cushioning of the impact allows to avoid the risk of permanent actuator damage caused by the inevitable moment of inertia of the rotor of the motor 6. Said delay, although being nowadays reduced to a minimum with modem motor control and actuation means, may in fact damage irreparably the mechanical elements of the actuator and also the motor 6, in which intense current peaks occur.

Advantageously, the recirculating ballscrew 9, which is part of the rotation-preventing limiter 16 for cushioning the impact, is engaged along the thread (which has an appropriate profile) of the actuation shaft 7, which in turn is accommodated slidingly in a longitudinal chamber 18 formed within the slider 8; the chamber 18 forms a bottom 19 proximate to the second end portion 11, in which a circular hole 20 is formed.

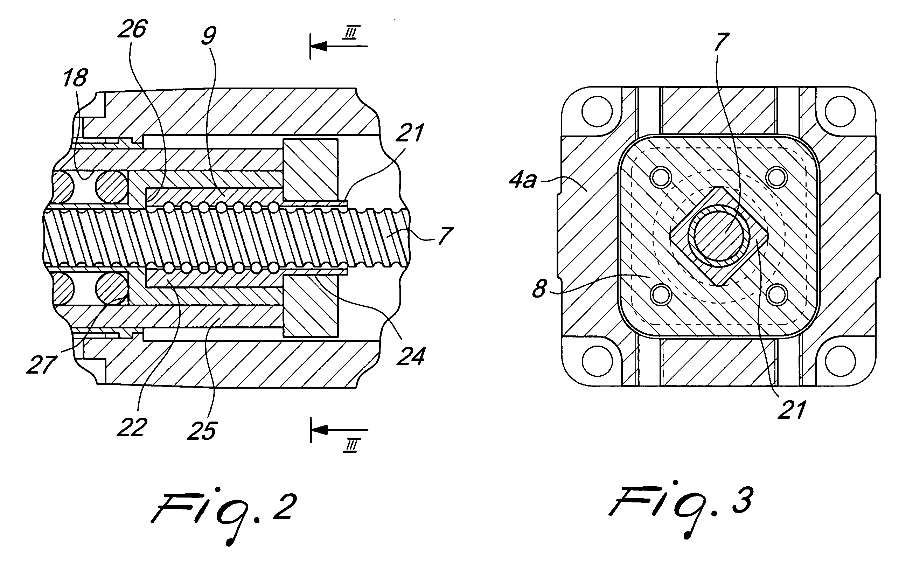

The lead screw 9 forms a first end 21, which is coupled with a side-fit coupling to the slider 8 at the first end portion 11 (Figures 2 and 3), and a second end 22, which is associated with elastic means 23, which are provided within the chamber 18 and abut against the bottom 19.

Advantageously, the first end 21 of the lead screw 9 has a substantially square transverse cross-section with rounded comers (Figure 3) and is engaged slidingly within a respective opening 24, which has a cross-section that is complementary thereto and is provided in the first end portion 11 of the slider 8. Said side-fit coupling between the lead screw 9 and the slider 8 prevents mutual rotation of said two components, accordingly allowing torque transmission and therefore advancement along the guide 10.

The lead screw 9 is accommodated so that it can slide with the first end 21 having a square transverse cross-section engaged in the first end portion 11 of the slider 8 and pushed against the end portion 11 by the pre-loading of the elastic means 23; the second end 22 of the lead screw 9 is accommodated in a sleeve 25, which is also coaxial to the actuation shaft 7 and whose outside diameter is slightly smaller than the inside diameter of the chamber 18 (Figure 3); said sleeve which forms an internal abutment surface 26 for said bush and an external abutment surface 27, which is substantially constituted by a shoulder that is perpendicular to the axis of symmetry of the sleeve 25.

Further, the sleeve 25 preferably forms a tubular extension 28, within which the actuation shaft 7 can slide, said shaft being locked axially; said extension is in turn engaged so that it can slide within the circular hole 20 of the slider 8, which instead can move axially.

The elastic means 23 are advantageously constituted by a helical cylindrical spring, which is coaxial to the actuation shaft 7 and has turns that are wound loosely around the tubular extension 28, with a first end 29 that is actuated by the external abutment surface 27 of the sleeve 25 and a second end 30 that abuts against the bottom 19.

The electrode holder 13 is affected by a substantially cylindrical recess 31, which is provided coaxially to the circular hole 20 and in which the free end of the tubular extension 28 can be inserted; moreover, the free end of the actuation shaft is provided with a stop ring 32 for limiting the stroke of the lead screw 9, which is preferably fixed by means of a screw 33 and prevents said lead screw from accidentally sliding off.

The operation of the actuator according to the invention is as follows. In the normal operating conditions of the welding machine 2, welding is performed, in a first step, by positioning the parts to be welded 15 between the electrodes 5 and 14 while said electrodes are mutually spaced and therefore the slider 8 is in the retracted stroke limit position (Figure 1). An actuation signal sent to the motor 6 then produces the rotation of the actuation shaft 7, which induces the translational motion of the slider 8 with a stroke that moves the second electrode 14 onto the parts 15 to be welded (Figure 4). It should be noted at this point that the spring 23 is advantageously fitted in the chamber 18 with a certain pre-loading, which is greater than the friction that occurs during the movement of the slider 8 along the shaft 7 and greater than the nominal welding force to be applied to the parts 15.

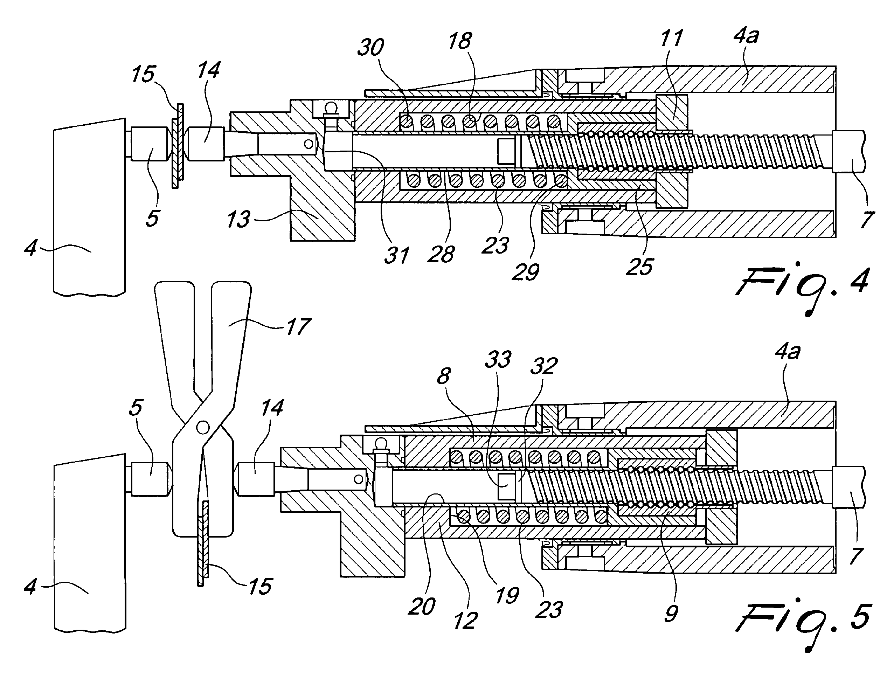

If a foreign object 17 (a tool in the specific case of Figure 5, but possibly also an incorrectly positioned part to be welded) becomes interposed during the advancement stroke of the slider 8, the second electrode 14 strikes it suddenly, in a step of the operation of the welding machine 2 during which the slider 8 is advancing at high speed in order to approach the parts 15 to be welded. Since the torque applied to the actuation shaft 7 becomes, during this step of operation, greater than the pre-loading force of the spring 23, the sudden stop of the slider 8 causes the sliding of the lead screw 9, preferably rigidly with the sleeve 25, within the chamber 18, with consequent compression of the spring 23 by an extent that corresponds to the time delay between the emergency stop control and the actual halting of the motor 6 (which is generally limited to a few millimeters). In this situation, the first end 21 can in fact slide freely along the opening 24, while the tubular extension 28 enters the recess 31 by a corresponding extent. In this manner, the elastic compression of the spring 23 on the part of the lead screw 9, by means of the sleeve 25, allows to cushion without damage the intense torque transmitted by the motor 6.

It has thus been shown that the invention achieves the intended aim and objects.

By adjusting the pre-loading of the spring 23, it is possible to provide different impact cushioning sensitivities, according to the various requirements of application.

The invention thus conceived is susceptible of numerous modifications and variations, all of which are within the scope of the appended claims.

All the details may further be replaced with other technically equivalent ones.

In practice, the materials used, as well as the shapes and dimensions, may be any according to requirements without thereby abandoning the scope of the protection of the appended claims.

The disclosures in Italian Patent Application No. BO2003A000655, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A linear screw actuator, comprising a rotatable actuation shaft (7), with which a slider (8) is associated by means of a screw-and-nut coupling, said slider being movable between two mutually opposite end positions, **characterized in that** it comprises a rotation-preventing limiter (16) that is suitable to cushion elastically the accidental impact of said slider (8) against foreign objects (17) in any position of its advancement stroke along said actuation shaft (7).

2. The linear actuator according to claim 1, **characterized in that** said rotation-preventing limiter (16) comprises a recirculating ballscrew (9), which is engaged along said actuation shaft (7) and in turn is coupled with a side-fit coupling to said slider (8) in a first end (21) and is accommodated so that it can slide along a longitudinal chamber (18) of said slider (8) that is coaxial to said shaft (7), said ballscrew (9), at its second end (22), being associated with elastic means (23), which are provided in said chamber (18) and abut against the bottom (19) of said chamber (18), so that an accidental impact of said slider (8) along its advancement stroke, with a consequent sudden stop, causes, for an extent that corresponds substantially to the delay in the stop control of the actuator actuation means, the compression of said elastic means (23) by said ballscrew (9) in order to cushion the impact and limit its effects, the side-fit rotation-preventing coupling between said ballscrew (9) and said slider (8) being at the same time maintained by way of the sliding of said ballscrew (9) within said first end (21) by an extent that corresponds to the compression of said elastic means (23).

3. The linear actuator according to claims 1 and 2, **characterized in that** said first end (21) of said ballscrew (9) has a substantially square transverse cross-section and is engaged slidingly in a respective opening (24), which has a complementary cross-section and is provided in a first end portion (11) of said slider (8), so as to prevent the mutual rotation, about said actuation shaft (7), of said ballscrew (9) and said slider (8).

4. The linear actuator according to one or more of the preceding claims, **characterized in that** said elastic means (23) are constituted by a helical cylindrical spring, which is fitted coaxially to said actuation shaft (7) and forms a first end (29), which abuts at said second end (22), and a second end (30), which abuts against said bottom (19), said actuation shaft (7) passing through said elastic means (23) so as to contain the axial space occupation.

5. The linear actuator according to one or more of the preceding claims, **characterized in that** said ballscrew (9) is accommodated, and pushed by the pre-loading of said elastic means (23), in a sleeve (25) so that said second end (22), which is coaxial to said actuation shaft (7), forms a respective internal abutment surface (26) for said second end (22), and an external abutment surface (27) for said first end (29), said sleeve (25) forming a tubular extension (28) that is inserted within the turns of said spring (23) so as to constitute a protection thereof within said chamber (18).

6. The linear screw actuator, particularly of the electrically-operated type for resistance-welding machines, according to one or more of the preceding claims, **characterized in that** an electrode holder (13) of the welding machine (2) is fixed to said slider (8) at a second end portion (12).

7. The linear actuator according to one or more of the preceding claims, **characterized in that** said second end portion (12) of said slider (8) is affected by a circular hole (20), which is coaxial to said actuation shaft (7) and in which the free end of said extension (28) can engage slidingly, said electrode holder (13) being provided with a substantially cylindrical recess (31), which is coaxial to said hole (20), for the insertion of said extension (28) during the cushioning of an accidental impact.
